# EUROPEAN PATENT APPLICATION

(11) **EP 1 647 826 A1**
(43) Date of publication of application: **19.04.2006**
(21) Application number: 05751170.1
(22) Date of filing: 14.06.2005
(51) Int. Cl.: G01N 35/02

(54) **ANALYZER, COVER DEVICE AND REAGENT STORING DEVICE**

(30) Priority: 18.06.2004 JP 2004180918
(71) Applicant: Kabushi Kaisha Toshiba, Tokyo 105-8001 (JP); Toshiba Medical Systems Corporation, Otawara-shi, Tochigi-ken 324-8550 (JP)
(72) Inventor: MATSUMOTO, Satoshi, (JP)
(74) Representative: Kramer - Barske - Schmidtchen
(86) International application number: PCT/JP2005/010855
(87) International publication number: WO 2005/124367

(57) **Abstract**

An analyzer that causes a sample and a reagent to react with each other and analyzes the sample, the analyzer including reagent containers (51) that store reagents and include openings (51b) for putting in and taking out the reagents, inner lids (83) that are provided to be movable relatively to the openings (51b) and used for opening and closing the openings (51b), a container shelf (53) that moves the reagent containers (51), and an opening/closing mechanism (92) that opens and closes the openings (51b) by moving the inner lids (83) using movement of the reagent containers (51).

## Description

### Technical Field

The present invention relates to an analyzer, a lid device, and a reagent storing device for testing samples and the like.

### Background Art

An analyzer is an apparatus that automatically performs component analysis and research for samples by mixing reagents in a sample of humor such as blood, urine, or cerebrospinal fluid, a tissue, and the like and checking reaction states using light. This analyzer is widely used in hospitals, testing agencies, and the-like because the analyzer can perform a large amount of component analyses and researches simultaneously.

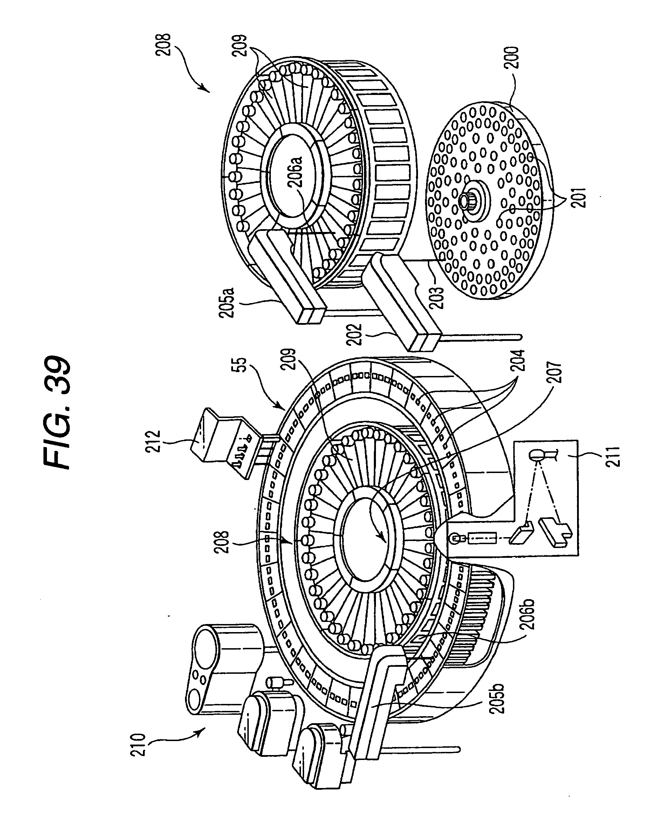

FIG. 39 is a perspective view of a conventional analyzer. A sampler 200 shown in FIG. 39 rotates around an axis thereof and moves sample containers 201 containing samples to be analyzed to a position of a sample dispensing mechanism 202.

The sample dispensing mechanism 202 aspirate the samples in the sample containers 201 with a probe 203 and dispense the samples into a reaction container 204. A reaction disk 55 rotates around an axis thereof and moves the reaction containers 204 to positions of reagent dispensing mechanisms 205a and 205b.

The reagent dispensing mechanisms 205a and 205b suck reagents to be used for measurement of a sample in probes 206a and 206b from reagent containers 209 in a reagent storage 208 and discharge the reagents into the reaction containers 204 of the reaction disk 55.

Thereafter, the reaction disk 55 rotates around an axis thereof and moves the reaction containers 204 to a position of an agitating unit 210. The agitating unit 210 agitates mixed liquid of samples and reagents in the reaction container 204 with an agitator. The mixed liquid in the reaction containers 204 is subjected to component analysis by a photometer 211. Reaction liquid after end of the analysis is discarded and the reaction containers 204 are cleaned by a cleaning mechanism 212.

Incidentally, a volatile reagent, a reagent denaturing because of a temperature change, and the like are also stored in the reagent storage 208. Therefore, in the conventional analyzer, concentration of a reagent due to volatilization, deterioration in a reagent due to a temperature change, and penetration of the volatilized reagent into other reagents are prevented by putting lids on the respective reagent containers 209 and cooling the entire reagent storage (see, for example, Patent Documents 1 to 3 and Non-patent Document 1).
Patent Document 1: JP-A-2002-48803
Patent Document 2: JP-A-8-160050
Patent Document 3: JP-A-7-20132
Non-patent Document: "Influences to Other Test Reagents due to Reagent Perspiration and Measures against the Influences" Toshimi Sato, Kenji Tani, Hajime Yoshimura, Ikunosuke Sakurabayashi

### Disclosure of Invention

However, in this analyzer, attachment and detachment work for a lid is necessary before and after use. This work imposes a heavy burden on a user. Moreover, it is likely that, when the user forgets to lid reagent containers, reagents in the reagent containers deteriorate or concentrate. Thereafter, it is impossible to perform satisfactory analyses.

Moreover, when the analyzer is used for a long period of time such as twenty-four hours, it is necessary to keep openings of the reagent containers opened throughout the period. Thus, an influence on analyses due to the deterioration or the concentration of the reagents is apprehended. It is also likely that a volatilized reagent penetrates into reagents in the other reagent containers to change characteristics of the reagents.

The invention has been devised in view of the circumstances and it is an object of the invention to provide an analyzer, a lid device, and an agent storing device that can open openings of reagent containers only when reagents are dispensed.

In order to attain the object, an analyzer, a lid device, and a reagent storing device of the invention are constituted as described below.
(1) An analyzer that causes a sample and a reagent to react with each other and analyzes the sample, the analyzer including: reagent containers that store reagents and include openings for putting in and taking out the reagents; lid members that are provided to be movable relatively to the openings and used for opening and closing the openings; a shelf that moves the reagent containers; and an opening/closing device that opens and closes the openings by moving the lid members using movement of the reagent containers.
(2) In the analyzer described in (1), the movement of the reagent containers is a rotational motion.
(3) In the analyzer described in (1), the movement of the reagent containers is a linear motion.
(4) In the analyzer described in (1), the opening/closing device moves the lid members perpendicularly to axes of the openings.
(5) In the analyzer described in (1), the opening/closing device moves the lid members parallel to axes of the openings.
(6) The analyzer described in (1) includes a member that moves, when the lid members close the openings, the lid members to the openings side.
(7) An analyzer that causes a sample and a reagent to react with each other and analyzes the sample, the analyzer including: reagent containers that store reagents and include openings for putting in and taking out the reagents; lid members that are provided to be movable relatively to the openings and used for closing the openings; a shelf for moving the reagent containers; and a closing device that closes the opened openings by moving the lid members using movement of the reagent containers.
(8) In the analyzer described in (7), the movement of the reagent containers is a rotational motion.
(9) In the analyzer described in (7), the movement of the reagent containers is a linear motion.
(10) In the analyzer described in (7), the closing device moves the lid members perpendicularly to axes of the openings.
(11) In the analyzer described in (7), the closing device moves the lid members parallel to axes of the openings.
(12) The analyzer described in (7), the analyzer includes a member that moves, when the lid members close the openings, the lid members to the openings side.
(13) A lid device provided in openings of reagent containers that is moved to a predetermined position as need arises, the lid device including: lid members that are provided to be slidable relatively to the openings of the reagent containers and includes holes; and an opening/closing device that opens and closes the openings of the reagent containers by sliding the lid members using movement of the reagent containers to adjust positions of the holes and the openings.
(14) A reagent storing device that is used for storing reagents and moved to a predetermined position as need arises, the reagent storing device including: reagent containers that store the reagents and include openings for putting in and taking out the reagents; lid members that are provided to be slidable relatively to the openings and have holes; and an opening/closing device that opens and closes the openings of the reagent containers by sliding the lid members using movement of the reagent container to adjust positions of the holes and the openings.

### Brief Description of Drawings

FIG. 1 is a schematic perspective view of an analyzer according to a first embodiment of the invention.
FIG. 2 is a schematic perspective view of a reagent storage according to the embodiment.
FIG. 3 is a schematic plan view of a lid member and an opening/closing block according to the embodiment.
FIG. 4 is a cross sectional view of the lid member and the opening/closing block at the time when an inner lid according to the embodiment is in a closing position.
FIG. 5 is a cross sectional view of the lid member and the opening/closing block at the time when the inner lid according to the embodiment is in an opening position.
FIG. 6 is a perspective view of a swing arm and the inner lid according to the embodiment.
FIG. 7 is a front view of the opening/closing block according to the embodiment.
FIG. 8 is a schematic plan view of a lid member and an opening/closing block according to a second embodiment of the invention.
FIG. 9 is a cross sectional view of the lid member and the opening/closing block at the time when an inner lid according to the embodiment is in a closing position.
FIG. 10 is a cross sectional view of the lid member and the opening/closing block at the time when the inner lid according to the embodiment is in an opening position.
FIG. 11 is a schematic perspective view of a swing arm and the inner lid according to the embodiment.
FIG. 12 is a schematic plan view of a lid member and an opening/closing block according to a third embodiment of the invention.
FIG. 13 is a cross sectional view of the lid member and the opening/closing block at the time when the inner lid according to this embodiment is in a closing position.
FIG. 14 is a cross sectional view of the lid member and the opening/closing block at the time when the inner lid according to the embodiment is in an opening position.
FIG. 15 is a schematic plan view of a lid member and an actuator according to a fourth embodiment of the invention.
FIG. 16 is a cross sectional view of the lid member and the actuator according to the embodiment.
FIG. 17 is a schematic plan view of a lid member and an actuator according to a fifth embodiment of the invention.
FIG. 18 is a cross sectional view of the lid member and the actuator according to the embodiment.
FIG. 19 is a side view of a pressing member and a releasing member according to the embodiment.
FIG. 20 is a schematic plan view of a guiding member and a lid member according to a sixth embodiment of the invention.
FIG. 21 is a sectional view along line A-A in FIG. 20 of the guiding member according to the embodiment.
FIG. 22 is a sectional view along line B-B in FIG. 20 of the guiding member according to the embodiment.
FIG. 23 is a cross sectional view of the guiding member and the lid member at the time when an inner lid according to the embodiment is in a closing position.
FIG. 24 is a cross sectional view of the guiding member and the lid member at the time when the inner lid according to the embodiment is in an opening position.
FIG. 25 is a diagram of a relation between the inner lid and an opening at the time when the inner lid according to the embodiment is in the closing position.
FIG. 26 is a diagram of a relation between the inner lid and the opening at the time when the inner lid according to the embodiment is in the opening position.
FIG. 27 is a schematic plan view of a guiding member and a lid member according to a seventh embodiment of the invention.
FIG. 28 is a cross sectional view of the guiding member and the lid member at the time when the inner lid according to the embodiment is in a closing position.
FIG. 29 is a cross sectional view of the guiding member and the lid member at the time when the inner lid according to the embodiment is in an opening position.
FIG. 30 is a schematic plan view of a guiding member and a lid member according to an eighth embodiment of the invention.
FIG. 31 is a schematic plan view of a guiding member and a lid member according to a ninth embodiment of the invention.
FIG. 32 is a schematic plan view of a guiding member and a lid member according to a tenth embodiment of the invention.
FIG. 33 is a diagram of a relation between an inner lid and an opening at the time when the inner lid according to the embodiment is in a closing position.
FIG. 34 is a diagram of a relation between the inner lid and the opening at the time when the inner lid according to the embodiment is in an opening position.
FIG. 35 is a schematic plan view of a guiding member and a lid member according to an eleventh embodiment of the invention.
FIG. 36 is a diagram of a relation between an inner lid and an opening at the time when the inner lid according to the embodiment is in a closing position.
FIG. 37 is a diagram of a relation between the inner lid and the opening at the time when the inner lid according to the embodiment is in a closing position.
FIG. 38 is a schematic plan view of a guiding member and a lid member according to a twelfth embodiment of the invention.
FIG. 39 is a perspective view of a conventional analyzer.

### Best Mode for Carrying Out the Invention

First to twelfth embodiments of the invention will be hereinafter explained with reference to the drawings.

### (First embodiment)

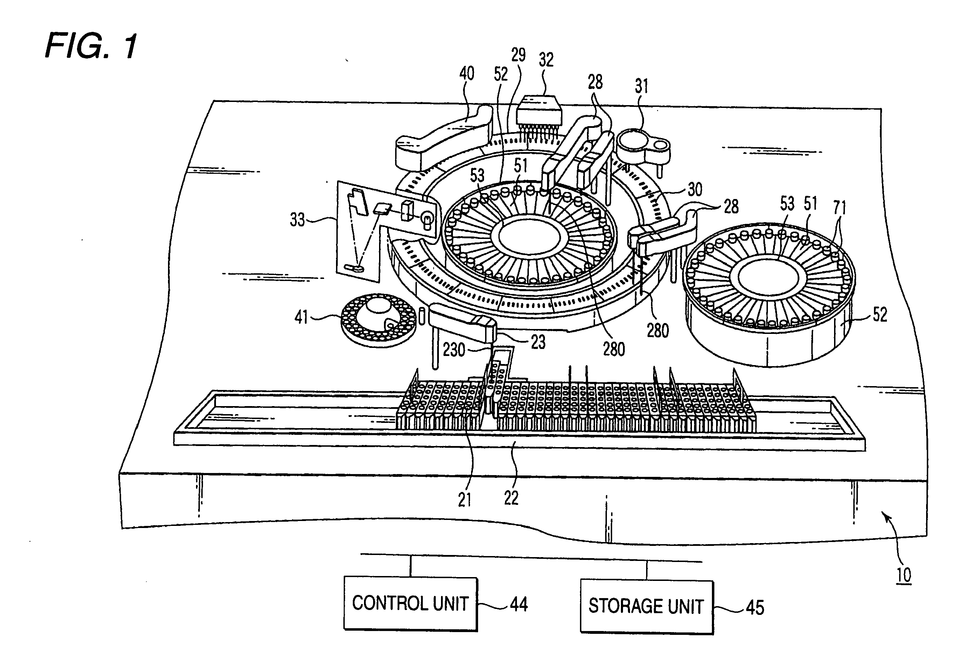

The first embodiment of the invention will be explained using FIGS. 1 to 7.

### (Constitution of an analyzer)

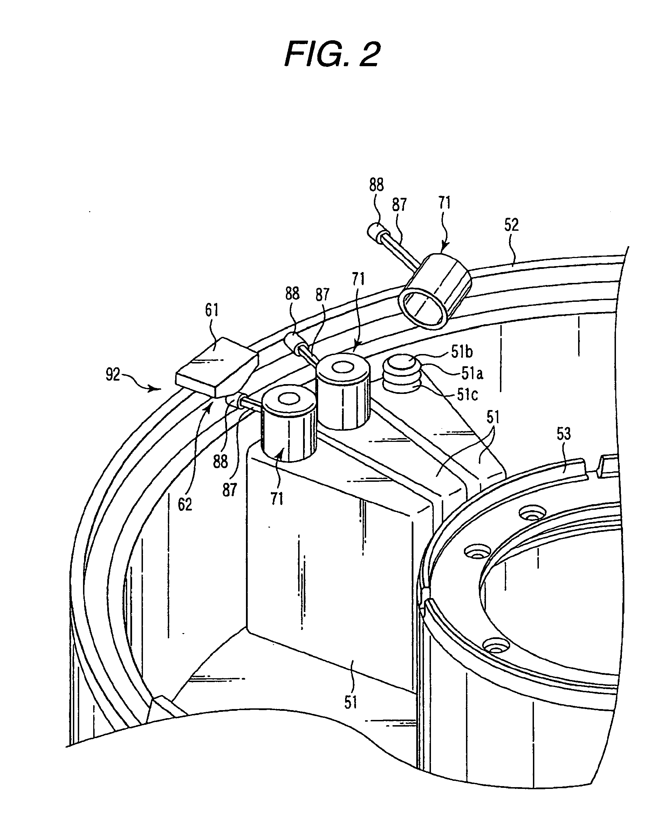

FIG. 1 is a schematic perspective view of an analyzer according to the first embodiment of the invention. FIG. 2 is a perspective view of a reagent storage according to the embodiment.

As shown in FIGS. 1 and 2, this analyzer includes an apparatus body 10, sample containers 21, a pedestal 22, a sample dispensing arm 23, reagent containers 51, a reagent storage 52, a container shelf 53 a reagent dispensing arm 28, a reaction disk 29, reaction tubes 30, an electrode unit 31, a cleaning unit 32, a measuring unit 33, an agitating unit 40, a sample container 41, a control unit 44, a storage unit 45, an opening/closing block 61, and lid members 71.

The components will be explained.

The sample containers 21 store samples such as a serum of a human body.

The pedestal 22 supports the plural sample containers 21 and moves the sample containers 21 storing samples to be analyzed to a position of a sample dispensing probe 230 in accordance with a predetermined sequence.

In this embodiment, the pedestal 22 that moves the sample containers 21 linearly is used. However, the invention is not limited to this. A disk sampler that arranges the sample containers 21 in, for example, an annular shape and supports the sample containers 21 may be used.

The sample dispensing arm 23 has the sample dispensing probe 230. This sample dispensing probe 230 rotates around a supporting column of the sample dispensing arm 23 and moves up and down along the supporting column. In a dispensing operation, this sample dispensing arm 23 aspirate a predetermined sample from the sample containers 21 using the sample dispensing probe 230 and dispense the sample into the reaction tubes 30.

The reagent container 51 stores a reagent that are caused to react with a sample. A mouth 51a is provided on an upper surface of the reagent container 51. This mouth 51a includes an opening 51b for putting in and taking out the reagent in the center thereof and includes a screw groove 51c in the outer periphery thereof. A lid member 71 is provided to be detachably attachable to this mouth 51a. Since the lid member 71 is an important component of the invention, the lid member 71 will be explained in detail later.

The reagent storage 52 is formed in a cylindrical shape and fixed to the apparatus body 10 in a posture in which an axis of the reagent storage 52 faces the vertical direction. The opening/closing block 61 is provided in a position opposed to the reagent dispensing arm 28 at an upper end of the reagent storage 52 (hereinafter referred to as "dispensing position"). This opening/closing block 61 constitutes an opening/closing mechanism 92 for opening and closing the opening 51b in conjunction with the lid member 71. Since the opening/closing block 61 is an important component of the invention, the opening/closing block 61 will be explained in detail later.

The container shelf 53 is supported to be rotatable around the axis of the reagent storage 52 in the reagent storage 52. The plural reagent containers 51 are detachably held in the outer periphery of the container shelf 53. A driving device (not shown) is connected to the container shelf 53. This driving device rotates the container shelf 53 at timing corresponding to an analysis item in accordance with an instruction from the control unit 44 to move the reagent container 51 containing a predetermined reagent to the dispensing position.

The reaction disk 29 includes the plural tubes 30 in the outer periphery thereof. The reaction disk 29 moves a predetermined reaction tube 30 to a position of the sample dispensing arm 23, the reagent dispensing arm 28, or the agitating unit 40 in accordance with a predetermined sequence.

The reaction tubes 30 are transparent containers made of high-quality glass or plastic that causes a sample and a reagent to react with each other. The reaction tubes 30 are adjusted to temperature corresponding to a type of the sample. For example, when the sample is a serum, temperature of the reaction tubes 30 is adjusted to about human body temperature (about 37°C). In the reaction tubes 30, an agitator or the like of the agitating unit 40 is cleaned by a predetermined detergent.

The electrode unit 31 measures a component amount of a specific electrolyte of mixed fluid of a sample and a reagent.

The cleaning unit 32 cleans the reaction tubes 30 after the measurement. Water, a detergent, and the like are used as cleaning liquid.

The measuring unit 33 measures absorbance of a sample and tests a reaction process such as a color development state of the sample added with a reagent. In a data control unit (not shown), concentration calculation or the like for an analysis component by calibration or the like is performed on the basis of a result of the measurement. As a measurement method for absorbance, for example, a method called a colorimetric method is used.

The agitating unit 40 agitates a sample and a reagent in the reaction tubes 30 with the agitator and causes the sample and the reagent to sufficiently react with each other. When the sample and the reagent are agitated, the agitator of the agitating unit 40 is cleaned by water or the predetermined detergent before agitating a next sample and a next reagent.

The sample container 41 stores a detergent for cleaning a sample and the like adhering to the sample dispensing probe 230.

The control unit 44 performs overall control concerning operations of this analyzer. This control unit 44 performs control concerning operations of the sample containers 21, the pedestal 22, the sample dispensing arm 23, the reagent dispensing arm 28, the reaction disk 29, the electrode unit 31, the measuring unit 33, the agitating unit 40, the reagent containers 51, the container shelf 53, and the like.

The storage unit 45 stores an association table that associates reagents and measurement items, an association table that associates measurement items and detergents, and the like. Dispensing of a reagent, cleaning of the agitator, and the like are performed on the basis of these association tables.

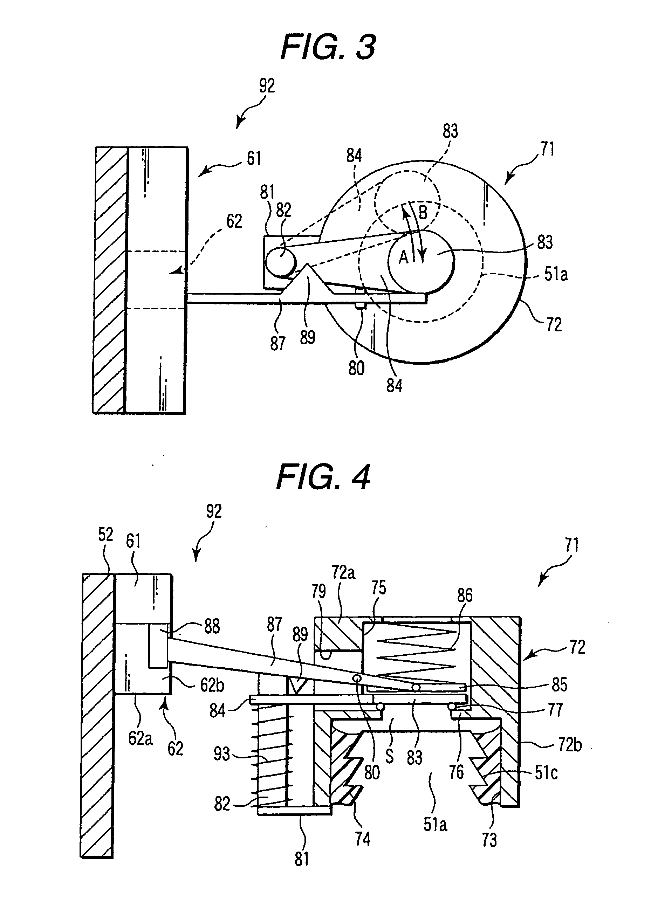

Constitutions of the lid member 71 and the opening/closing block 61 will be explained in detail with reference to FIGS. 3 to 6.

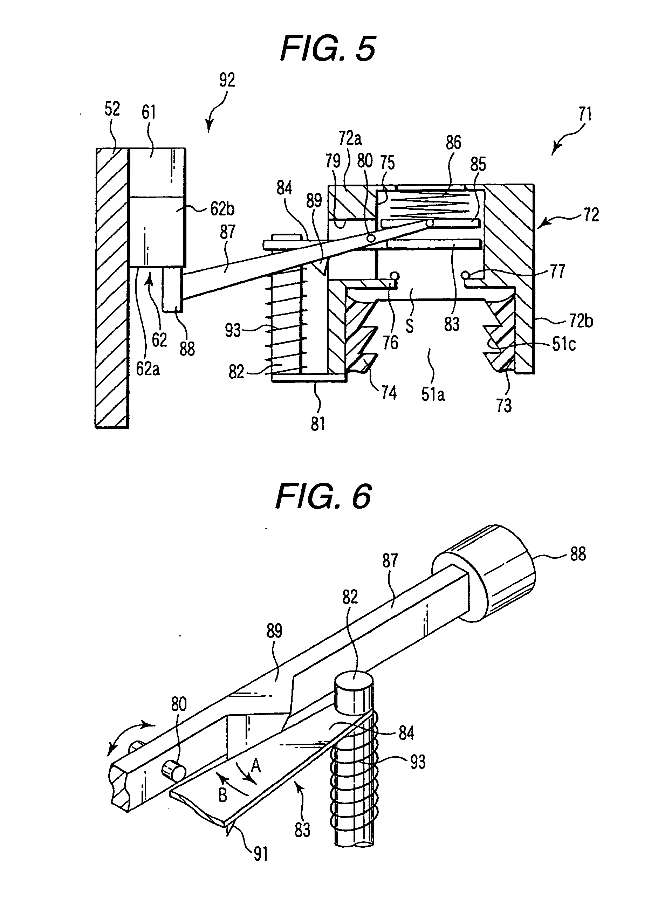

FIG. 3 is a schematic plan view of the lid member 71 and the opening/closing block 61 according to this embodiment. FIG. 4 is a cross sectional view of the lid member 71 and the opening/closing block 61 at the time when an inner lid 83 according to this embodiment is in a closing position. FIG. 5 is a cross sectional view of the lid member 71 and the opening/closing block 61 at the time when the inner lid 83 according to this embodiment is in an opening position. FIG. 6 is a perspective view of a swing arm 87 and the inner lid 83 according to this embodiment.

As shown in FIGS. 3 to 6, this lid member 71 includes an outer lid 72 that is fit in the mouth 51a of the reagent container 51. This outer lid 72 is formed in substantially a cylindrical shape. A housing section 73 that houses the mouth 51a of the reagent container 51 is formed on a lower surface of the outer lid 72.

A seal material 74 is provided between an inner peripheral surface of the housing section 73 and an outer peripheral surface of the mouth 51a. As the seal material 74, a soft material such as rubber is used. Consequently, even after the lid member 71 is attached to the mouth 51a, it is possible to rotate the lid member 71 relatively to the mouth 51a.

An upper wall opening 75 is provided in an upper wall 72a of the outer lid 72. This upper wall opening 75 communicates with the housing section 73. An annular projection 76 is provided in a lower side portion on an inner peripheral surface of the upper wall opening 75. A seal material 77 (e.g., O ring; hereinafter referred to as "seal material 77") is disposed on an upper surface of the projection 76.

In a peripheral wall 72b of the outer lid 72, a peripheral wall opening 79 is provided in a position opposed to a wall of the reagent storage 52. This peripheral wall opening 79 communicates with the upper wall opening 75. A supporting pin 80 is provided horizontally in an inner side of the peripheral wall opening 79. A supporting column 82 of a round bar shape is provided vertically in a position opposed to the peripheral opening 79. This supporting column 82 is fixed to the peripheral wall 72b of the outer lid 72 via a bracket 81.

In the upper wall opening 75, the inner lid 83 of a band plate shape that opens and closes the opening 51b of the reagent container 51 is provided substantially horizontally. A support section 84 of the inner lid 83 projects to an outer side in a radial direction of the outer lid 72 from the peripheral wall opening 79. A tip of the support section 84 is supported by the supporting column 82 so as to be rotationally movable and vertically movable.

Consequently, since the inner lid 83 rotates around the supporting column 82, the inner lid 83 can move to a position retracted from a position right above the mouth 51a of the reagent container 51 (a position indicated by a dotted line in FIG. 3) and the position right above the mouth 51a of the reagent container 51 (a position indicated by a solid line in FIG. 3).

When the inner lid 83 moves to the retracted position, a space S formed above the mouth 51a communicates with the outside of the lid member 71 via the upper wall opening 75. This means that the opening 51b of the reagent container 51 is opened.

When the inner lid 83 moves to the position right above the mouth 51a, the inner lid 83 and the seal material 77 adhere to each other and the space S formed above the mouth 51a is closed. This means that the opening 51b of the reagent container 51 is closed. Thus, the retracted position is referred to as an "opening position" and the position right above the mouth 51a is referred to as a "closing position".

A first spring 93 is fit in the supporting column 82. A lower end and an upper end of this first spring 93 are fixed to the bracket 81 and the inner lid 83, respectively. The first spring 93 urges the inner lid 83 upward and in an arrow B direction with an elastic force thereof.

An annular pressing member 85 is provided substantially horizontally in the upper wall opening 75. This pressing member 85 is located on an upper side of the inner lid 83. A second spring 86 is provided on an upper side of the pressing member 85. This second spring 86 is housed in the upper wall opening 75 and presses the inner lid 83 downward via the pressing member 85.

One end of the swing arm 87 is rotatably coupled to a predetermined position of an outer peripheral surface of the pressing member 85. This swing arm 87 is located in a side direction of the inner lid 83. A middle portion of the swing arm 87 is supported by the supporting pin 80 to be rotationally movable. The other end of the swing arm 87 projects to an outer side of the outer lid 72 from the peripheral wall opening 79. A guided block 88 is provided at a tip of the swing arm 87.

When the guided block 88 falls, the pressing member 85 rises in association with this movement. The inner lid 83 urged upward by the first spring 93 rises by an amount equivalent to the rise of the pressing member 85. When the guided block 88 rises, the pressing member 85 falls in association with this movement and pushes up the inner lid 83 against an urging force of the first spring 93.

An opening pawl 89 of substantially a triangular pyramid shape is provided in the swing arm 87 to be opposed to the inner lid 83. This opening pawl 89 is located between the supporting pin 80 and the supporting column 82. One ridge 91 of the opening pawl 89 is faced to the inner lid 83. This ridge 91 is tilted to be projected toward the inner lid 83 more largely in an upper part thereof. The inner lid 83 is in contact with a middle portion of the ridge 91.

Therefore, when the guided block 88 falls, the opening pawl 89 falls in association with this movement and the ridge 91 of the opening pawl 89 moves to the inner lid 83. As a result, the inner lid 83 is pushed by the ridge 91 to rotate in an arrow A direction and move to the opening position.

When the guided block 88 rises, the opening pawl 89 rises in association with this movement and the ridge 91 of the opening pawl 89 moves in a direction separating from the inner lid 83. As a result, the inner lid 83 urged by the first spring 93 rotates in an arrow B direction by an amount equivalent to the movement of the ridge 91 and moves to the closing position.

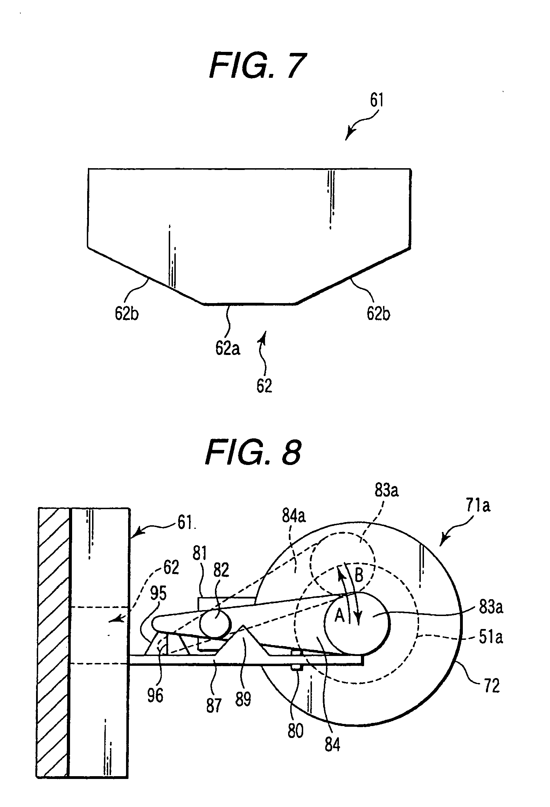

FIG. 7 is a front view of the opening/closing block 61 according to this embodiment.

As shown in FIG. 7, this opening/closing block 61 projects to an inner side of the reagent storage 52. A guiding.surface 62 is formed on a lower surface of the opening/closing block 61. This guiding surface 62 is a surface for guiding movement of the guided block 88 and includes a horizontal guiding surface 62a and two tilted guiding surfaces 62b extending to both sides of the horizontal guiding surface 62a.

### (Operation of the analyzer)

When the control unit 44 recognizes a reagent that is caused to react with a sample, the container shelf 53 is rotated by the driving device and the reagent container 51 storing the object reagent is moved to the dispensing position. When the object reagent container 51 approaches the dispensing position, the guided block 88 of the swing arm 87 comes into contact with a tilted guiding surface 63b of the opening/closing block 61 and falls along this tilted guiding surface 63b.

When the guided block 88 falls, the pressing member 85 rises in association with the movement. Consequently, pressing of the pressing member 85 against the inner lid 83 is released and the inner lid 83 rises by an amount equivalent to the rise of the pressing member 85 with an elastic force of the first spring 93.

When the guided block 88 falls, simultaneously with the rise of the pressing member 85, the opening pawl 89 falls. Consequently, the ridge 91 of the opening pawl 89 pushes the inner lid 83 in an arrow A direction to move the inner lid 83 to the opening position. As a result, the space S formed above the mouth 51a of the reagent container 51 communicates with the outside of the lid member 71 and the opening 51b of the reagent container 51 is opened.

When the guided block 88 shifts from the tilted guiding surface 63b of the opening/closing block 61 to the horizontal guiding surface 63a, the guided block 88 is maintained at a fixed height. Therefore, the inner lid 83 stays in the opening state while the guided block 88 is in contact with the horizontal guiding surface 62a.

When the inner lid 83 moves to the opening position, the rotation of the container shelf 53 stops. A reagent dispensing probe 280 is inserted into the reagent container 51 from the upper wall opening 75 and suction and dispensing of the reagent are performed.

When the dispensing of the reagent ends, the container shelf 53 is rotated again and the reagent container 51 storing a reagent to be used next is moved to the dispensing position. At this point, again, the pressing member 85 is urged downward by the second spring 86. Therefore, as the reagent container 51 moves away from the dispensing position, the guided block 88 shifts from the horizontal guiding surface 62a to the tilted guiding surface 62b. Then, the inner lid 83 is pushed by the pressing member 85 and the guided block 88 rises along the tilted guiding surface 61b of the opening/closing block 61.

When the guided block 88 rises, the opening pawl 89 rises in association with the movement and the ridge 91 of the opening pawl 89 moves in a direction separating from the inner lid 83. Consequently, the inner lid 83 urged by the first spring 93 moves in an arrow B direction by an amount equivalent to the movement of the ridge 91 and moves to the closing position. Consequently, the space S formed above the mouth 51a of the reagent container 51 comes into the closed state again and the opening 51b of the reagent container 51 is closed.

The inner lid 83 returned to the closing position is brought into close contact with the seal material 77 at a predetermined pressure by the pressing member 85 pushed down. Consequently, the space S formed above the mouth 51a of the reagent container 51 comes into a tightly closed state.

### (Attaching method for the lid member 71)

A user inserts the mouth 51a of the reagent container 51 into the housing section 73 formed in the outer lid 72 of the lid member 71, rotates the lid member 71 relatively to the mouth 51a, and sets a longitudinal direction of the inner lid 83 in a direction orthogonal to a rotating direction of the reagent container 51. Consequently, the lid member 71 is accurately attached to the mouth 51a of the reagent container 51.

### (Actions realized by this embodiment)

According to the analyzer according to this embodiment, an opening operation for the opening 51b of the reagent container 51 is performed using a rotational motion of the reagent container 51 at the time when the reagent container 51 approaches the dispensing position. A closing operation for the opening 51b of the reagent container 51 is performed using a rotational motion of the reagent container 51 at the time when the reagent container 51 separates from the dispensing position.

Therefore, since the opening 51b of the reagent container 51 is opened only at the time of dispensing, work of an operator is reduced and work efficiency is improved. Moreover, since a device such as an actuator is unnecessary, a constitution of the analyzer is not complicated.

According to the analyzer according to this embodiment, when the inner lid 83 is in the closing position, the pressing member 85 presses the inner lid 83 against the seal material 77. Therefore, at the time of non-dispensing, since the space S formed above the mouth 51a of the reagent container 51 comes into a tightly closed state, volatilization, modification, and the like of a reagent are further prevented.

Moreover, the user can obtain the analyzer of the invention simply by attaching the opening/closing block 61 at the upper end of the reagent storage 52 and attaching the lid member 71 in the mouth 51a of the reagent container 51.

The flexible seal material 74 is provided between the inner peripheral surface of the housing section 73 and the outer peripheral surface of the mouth 51a. Therefore, even after the lid member 71 is attached to the mouth 51a, the lid member 71 is made rotatable relatively to the mouth 51a. Thus, a direction of the inner lid 83 is easily adjusted.

### (Second embodiment)

Next, a second embodiment of the invention will be explained using FIGS. 8 to 11. Components same as those in the embodiment described above are denoted by the same reference numerals and signs and explanations of the components are omitted.

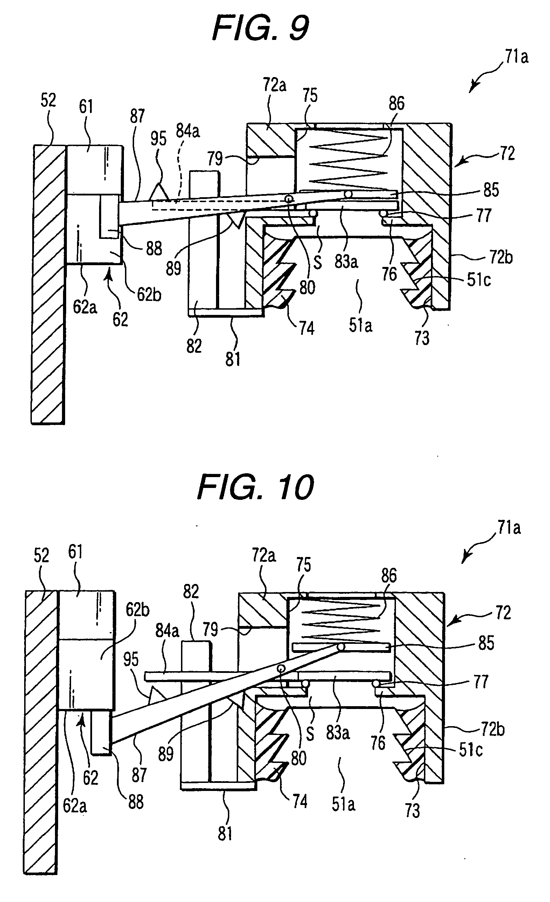

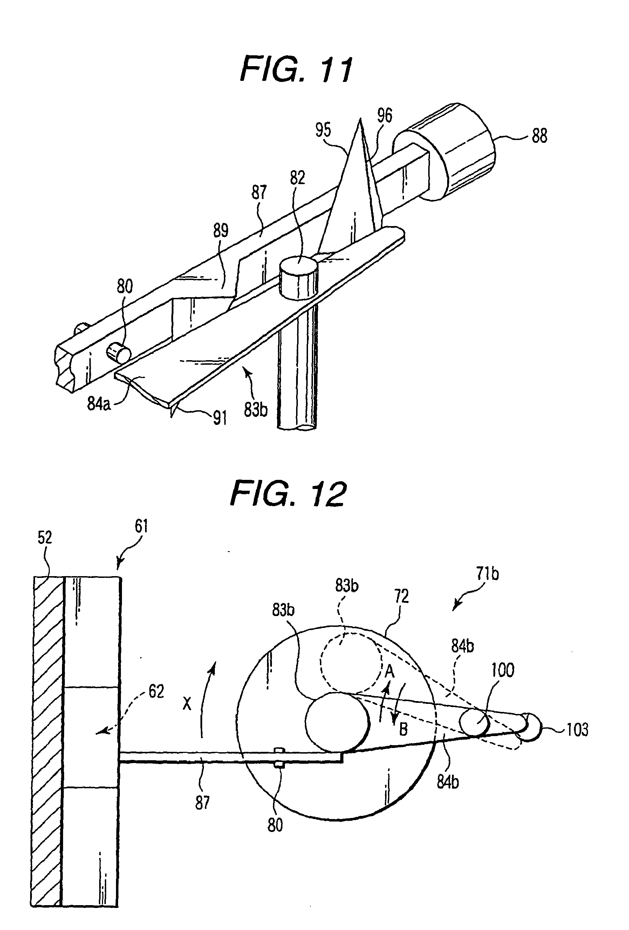

FIG. 8 is a schematic plan view of a lid member 71a and the opening/closing block 61 according to the second embodiment of the invention. FIG. 9 is a cross sectional view of the lid member 71a and the opening/closing block 61 at the time when an inner lid 83a according to this embodiment is in the closing position. FIG. 10 is a cross sectional view of the lid member 71a and the opening/closing block 61 at the time when the inner lid 83a according to this embodiment is in the opening position. FIG. 11 is a schematic perspective view of the swing arm 87 and the inner lid 83a according to this embodiment.

As shown in FIGS. 8 to 11, the lid member 71a according to this embodiment has, on a surface of the swing arm 87 opposed to the inner lid 83a, a closing pawl 95 of substantially a triangular pyramid shape for moving the inner lid 83a to the closing position.

This closing pawl 95 is located further on the guided block 88 side than the supporting column 82. One ridge 96 of the closing pawl 95 is faced to a support section 84a side of the inner lid 83a. This ridge 91 is tilted to be separated farther from the inner lid 83a in an upper part thereof. The inner lid 83a is in contact with a middle portion of the ridge 96.

What is important here is that the closing pawl 95 is located on the opposite side of the opening pawl 89 across the supporting column 82 and the ridge 91 of the opening pawl 89 and the ridge 96 of the closing pawl 95 are tilted in opposite directions.

In an analyzer with the constitution, when the inner lid 83a is in the opening position, if the guided block 88 of the swing arm 87 rises, the closing pawl 95 rises in association with this movement. Consequently, the ridge 96 of the closing pawl 95 pushes the support section 84a in an arrow B direction and the inner lid 83a moves to the closing position.

With such a constitution, as in the first embodiment, since the opening 51b of the reagent container 51 is opened only at the time of dispensing, deterioration and modification of a reagent are prevented.

### (Third embodiment)

A third embodiment of the invention will be explained using FIGS. 12 to 14. Components same as those in the embodiments described above are denoted by the same reference numerals and signs and explanations of the components are omitted.

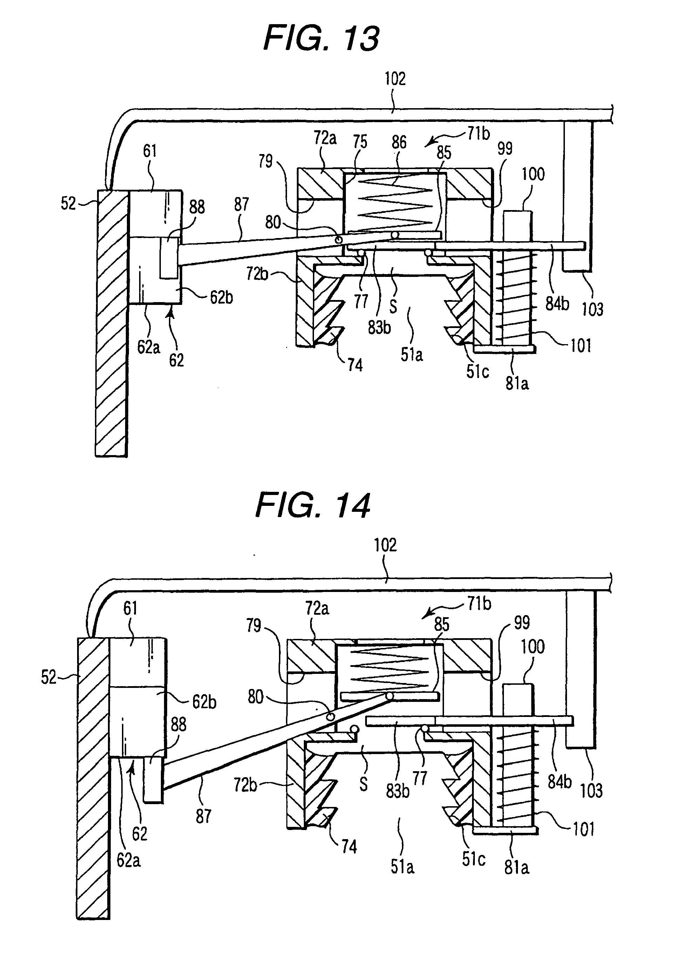

FIG. 12 is a schematic plan view of a lid member 71b and the opening/closing block 61 according to the third embodiment of the invention. FIG. 13 is a cross sectional view of the lid member 71b and the opening/closing block 61 at the time when an inner lid 83b according to this embodiment is in the closing position. FIG. 14 is a cross sectional view of the lid member 71b and the opening/closing block 61 at the time when the inner lid 83b according to this embodiment is in the opening position.

As shown in FIGS. 12 to 14, the lid member 71b according to this embodiment includes an insertion opening 99 in a position of the peripheral wall 72b of the outer lid 72 on the opposite side of the peripheral opening 79. A support section 84b of the inner lid 83b projects outward in a radial direction of the outer lid 72 from this insertion opening 99. A middle portion of the support section 84b is supported to be rotationally movable around a supporting column 100 arranged to be opposed to the insertion opening 99 and to be movable up and down.

This supporting column 100 is fixed to the peripheral wall 72b of the outer lid 72 via a bracket 81a. A third spring 101 is provided in an outer periphery of the supporting column 100. A lower end and an upper end of this third spring 101 are fixed to the bracket 81a and the inner lid 83b, respectively, and urge the inner lid 83 upward and in an arrow B direction with elasticity thereof.

A cover member 102 is provided in an upper surface opening of the reagent storage 52. An opening pin 103 for moving the inner lid 83b to the opening position is provided on a lower surface of the cover member 102 to be opposed to the opening/closing block 61.

This opening pin 103 is arranged substantially in the same position as a tip of the support section 84b of the inner lid 83b in a radial direction of the reagent storage 52. Consequently, when the reagent container 51 approaches the dispensing position while moving in a direction of arrow X, the tip of the support section 84b and the opening pin 103 collide with each other.

When the tip of the support section 84b and the opening pin 103 collide with each other, the inner lid 83b rotates in an arrow A direction and moves to the opening position. When the inner lid 83b moves to the opening position, the reagent dispensing probe 280 is inserted into the reagent container 51 from the upper wall opening 75 and suction and dispensing of the reagent are performed.

When the tip of the support section 84b and the opening pint 103 collide with each other, the pressing member 85 rises according to an operation of the swing arm 87. Therefore, since the inner lid 83b is not pressed by the seal member 77, the movement of the inner lid 83b is not hindered.

When the dispensing of the reagent ends, the container shelf 53 is rotated and the reagent container 51 storing a reagent to be used next is moved to the dispensing position. Consequently, the tip of the support section 84b moves away from the opening pin 103 and the inner lid 83b rotates in the arrow B direction according to urging of the third spring 101. As a result, the inner lid 83b moves to the closing position.

With such a constitution, as in the embodiments described above, since the opening 51b of the reagent container 51 is opened only at the time of dispensing, deterioration and modification of a reagent are prevented.

### (Fourth embodiment)

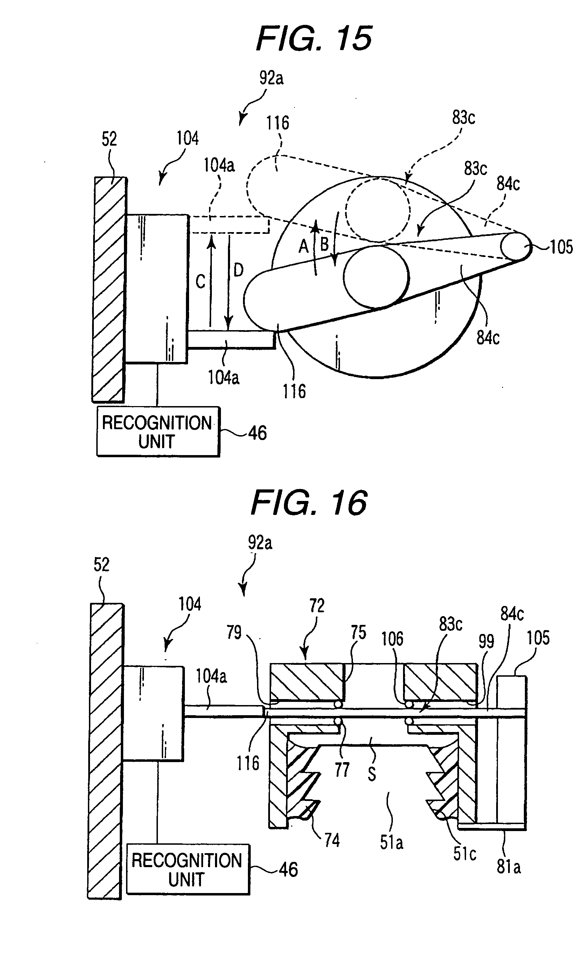

A fourth embodiment of the invention will be explained using FIGS. 15 and 16. Components same as those in the embodiments described above are denoted by the same reference numerals and signs and explanations of the components are omitted.

FIG. 15 is a schematic plan view of a lid member 71c and an actuator 104 according to the fourth embodiment of the invention. FIG. 16 is a cross sectional view of the lid member 71c and the actuator 104 according to this embodiment.

As shown in FIGS. 15 and 16, an analyzer according to this embodiment includes, at the upper end of the reagent storage 52, the actuator 104 for moving an inner lid 83c instead of the opening/closing block 61. In this embodiment, an opening/closing mechanism 92a for opening and closing the opening 51b is constituted by the actuator 104 and the lid member 71c. The actuator 104 includes a moving arm 104a that reciprocates in a horizontal surface. This moving arm 104a engages with an engaging section 116 provided at one end of the inner lid 83c and presses this engaging section 116w in an arrow C direction or an arrow D direction. Consequently, the inner lid 83c is moved to the opening position and the closing position. Therefore, in this embodiment, the engaging section 116 of the inner lid 83c projects to the outside of the outer lid 72 from the peripheral wall opening 79.

A recognition unit 46 is connected to the actuator 104. This recognition unit 46 recognizes that the object reagent container 51 has reached the dispensing position and dispensing of a reagent has been completed.

A support section 84c of the inner lid 83c is rotatably supported by a supporting column 105 arranged on the opposite side of the actuator 104 across the outer lid 72. However, in this embodiment, the inner lid 83c is made unmovable in an up to down direction. Therefore, a seal member 106 (e.g., O ring) is provided on an upper surface side of the inner lid 83c as well in order to improve tightness of the space S formed above the mouth 51a of the reagent container 51. This inner lid 83c is nipped by two seal materials 77 and 106 from above and below.

When it is recognized by the recognition unit 46 that the reagent container 51 has reached the dispensing position, the moving arm 104a is driven in the arrow C direction. Consequently, the inner lid 83c is rotated in an arrow A direction and moves to the opening position (a position indicated by a dotted line in FIG. 15).

When the opening 51b of the reagent container 51 is opened, the reagent dispensing probe 280 is inserted into the reagent container 51 from the upper wall opening 75 and suction and dispensing of the reagent are performed.

When it is recognized by the recognition unit 46 that the dispensing of the reagent has ended, the moving arm 104a is driven in the arrow D direction. Consequently, the inner lid 83c is rotated in an arrow B direction by the moving arm 104a and moves to the closing position (a position indicated by a solid line in FIG. 15).

In this way, as in the embodiments described above, since the opening 51b of the reagent container 51 is opened only at the time of dispensing, deterioration and modification of a reagent are prevented.

### (Fifth embodiment)

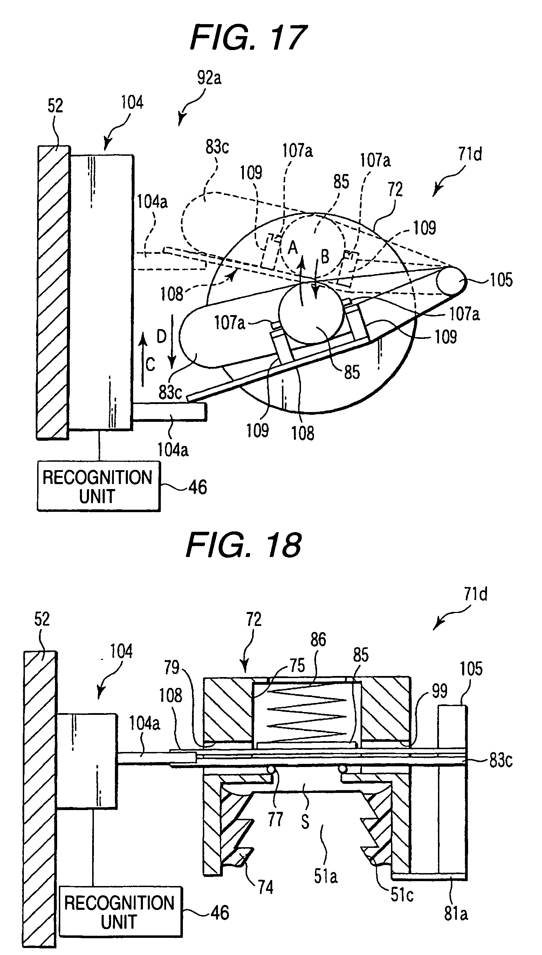

A fifth embodiment of the invention will be explained using FIGS. 17 to 19.

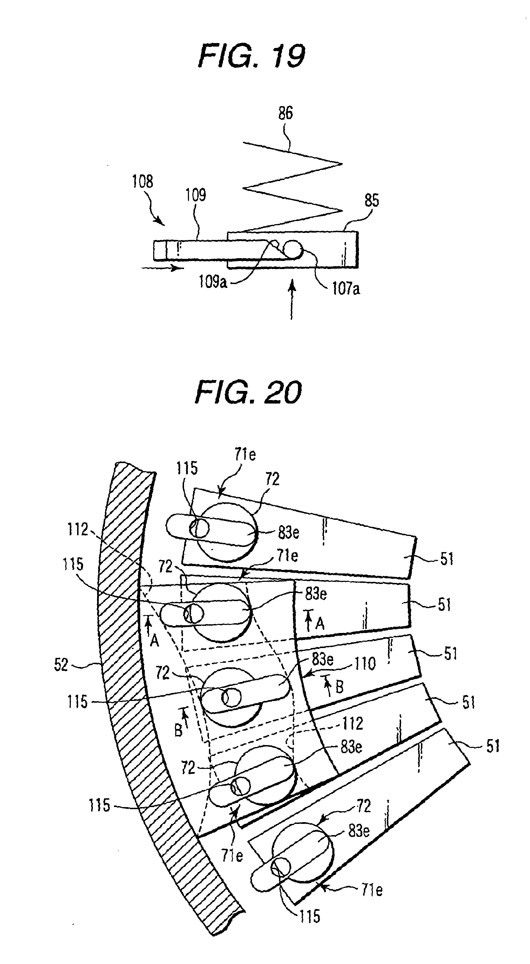

FIG. 17 is a schematic plan view of a lid member 71d and the actuator 104 according to the fifth embodiment of the invention. FIG. 18 is a cross sectional view of the lid member 71d and the actuator 104 according to this embodiment. FIG. 19 is a side view of the pressing member 85 and a releasing member 108 according to this embodiment.

As shown in FIGS. 17 to 19, the lid member 71d according to this embodiment is a lid member in which the pressing member 85 for pressing the inner lid 83c to the seal material 77 side and the releasing member 108 for releasing pressing by the pressing member 85 at the time when the inner lid 83c is moved to the opening position are added to the lid member 71c according to the fourth embodiment.

The pressing member 85 is practically the same as that in the first embodiment. However, two releasing projections 107a are provided on an outer peripheral surface thereof. These releasing projections 107a are arranged in positions shifted about 180 degrees in a peripheral direction of the pressing member 85.

The releasing member 108 is rotatably supported by a supporting column. Two releasing pieces 109 are provided in predetermined positions of the releasing member 108 at a predetermined interval. These releasing pieces 109 have slopes 109a at tips thereof. The releasing member 108 slips these slopes 109a underneath the releasing projections 107a and lifts the pressing member 85 to release pressing against of the pressing member 85 against the inner lid 83c.

When the reagent container 51 reaches the dispensing position according to rotation of the container shelf 53, the moving arm 104a is driven in an arrow C direction according to a driving signal from the recognition unit 46 and engages a tip thereof with the releasing member 108.

When the moving arm 104a and the releasing member 108 engage with each other, the moving arm 104a is further driven in the arrow C direction and slips the releasing pieces 109 underneath the releasing projections 170a of the pressing member 85. Consequently, the pressing member 85 is lifted by an amount equivalent to thickness of the releasing pieces 109 and the pressing of the pressing member 85 against the inner lid 83c is released.

When the pressing by the pressing member 85 is released, the moving arm 104a is further driven in the arrow C direction. When the moving arm 104a and the engaging section 116 of the inner lid 83c engage with each other, the moving arm 104a is further driven in the arrow C direction. Consequently, the inner lid 83c is rotated in an arrow A direction and moves to the opening position (a position indicted by a dotted line in FIG. 17). When the opening 51b of the reagent container 51 is opened, the reagent dispensing probe 280 is inserted into the reagent container 51 from the opening 75 and suction and dispensing of the reagent are performed.

When the dispensing of the reagent ends, the moving arm 104a is moved in an arrow B direction according to a driving signal from the recognition unit 46. Consequently, the inner lid 83c is returned to the closing position and, simultaneously, the inner lid 83c is pressed against the seal material 77 by the pressing member 85.

With such a constitution, tightness of the space S provided above the mouth 51a of the reagent container 51 is improved and deterioration and modification of the reagent are further prevented.

### (Sixth embodiment)

A sixth embodiment of the invention will be explained using FIGS. 20 to 26.

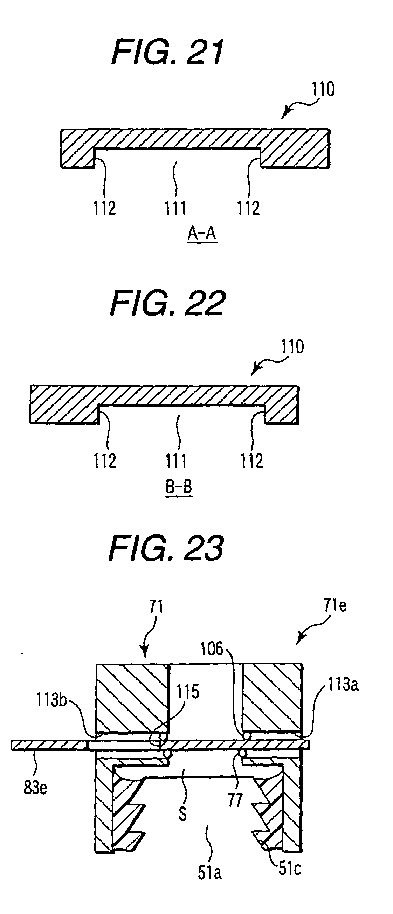

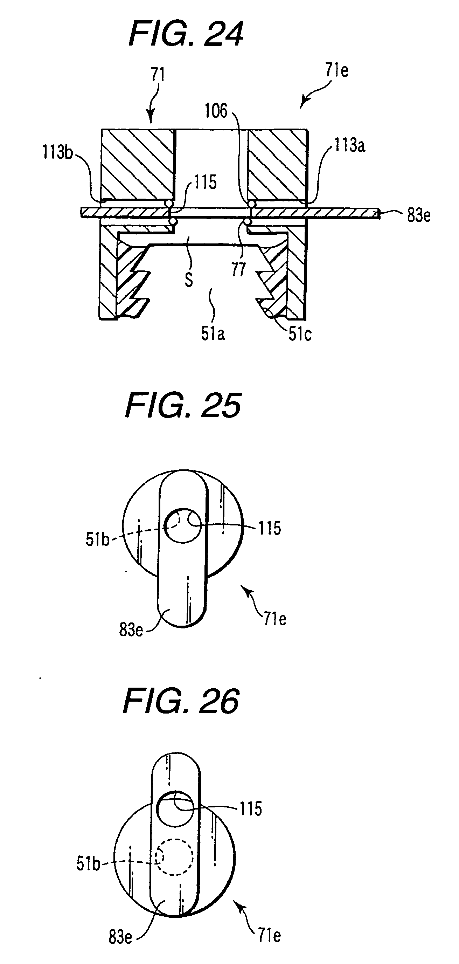

FIG. 20 is a schematic plan view of a guiding member 110 and a lid member 71e according to the sixth embodiment of the invention. FIG. 21 is a sectional view along line A-A in FIG. 20 of the guiding member 110 according to this embodiment. FIG. 22 is a sectional view along line B-B in FIG. 20 of the guiding member 110 according to this embodiment. FIG. 23 is a cross sectional view of the guiding member 110 and the lid member 71e at the time when an inner lid 83e according to this embodiment is in the closing position. FIG. 24 is a cross sectional view of the guiding member 110 and the lid member 71e at the time when the inner lid 83e according to this embodiment is in the opening position. FIG. 25 is a diagram of a relation between the inner lid 83e and the opening 51b at the time when the inner lid 83e according to this embodiment is in the closing position. FIG. 26 is a diagram of a relation between the inner lid 83e and the opening 51b at the time when the inner lid 83e according to this embodiment is in the opening position.

As shown in FIGS. 20 to 26, an analyzer according to this embodiment includes the guiding member 110 in the dispensing position of the reagent storage 52. A groove 111 is formed in a lower surface of the guiding member 110. Two guide surfaces 112 are formed in side surfaces of the groove 111 to be opposed to each other. These guide surfaces 112 are formed in a smooth waveform shape that approaches an axis of the reagent storage 52 as the guide surfaces 112 are closer to the middle in a peripheral direction of the reagent storage 52.

The peripheral wall 72b of the outer lid 72 according to this embodiment includes through-holes 113a and 113b. The through-holes 113a and 113b are opposed to the axis and the wall of the reagent storage 52, respectively. The inner lid 83e of a band plate shape is inserted into the through-holes 113a and 113b to be movable relatively to a radial direction of the reagent storage 52. Both ends of the inner lid 83e project to the outside of the outer lid 72 from the respective through-holes 113a and 113b. A circular hole 115 is formed in a predetermined position of the inner lid 83e.

For example, as shown in FIG. 25, when the hole 115 is opposed to the opening 51b of the reagent container 51 according to movement of the inner lid 83e, the space S formed above the mouth 51a communicates with the outside of the lid member 71e and the opening 51b of the reagent container 51 is opened. Therefore, a position of the inner lid 83e at this point is set as the "opening position".

As shown in FIG. 26, when the hole 115 is opposed to the opening 51b of the reagent container 51 according to movement of the inner lid 83e, the space S formed above the mouth 51a is sealed. Consequently, the opening 51b of the reagent container 51 is closed. Therefore, a position of the inner lid 83e at this point is set as the "opening position".

When the control unit 44 recognizes a reagent that is caused to react with a sample, the container shelf 53 is rotated and the reagent container 51 to be used for analysis moves toward the dispensing position. The inner lid 83e of the lid member 71e enters the groove 111 of the guiding member 110.

The inner lid 83e is pushed out to the axis side of the reagent storage 52 by the guide surfaces 112 of the guiding member 110 as the reagent container 51 approaches the dispensing position. Consequently, the inner lid 83e moves to the opening position and the opening 51b of the reagent container 51 is opened. The reagent dispensing probe 280 is inserted into the reagent container 51 from the upper wall opening 75 and suction and dispensing of the reagent are performed.

When the dispensing of the reagent ends, the reagent container 51 storing a reagent to be used next is moved toward the dispensing position according to rotation of the container shelf 53. At this point, the inner lid 83e is pushed out to the wall side of the reagent storage 52 by the guide surfaces 112 of the guiding member 110 as the reagent container 51, from which the dispending of the reagent ends, moves away from the dispensing position. Consequently, the inner lid 83e moves to the closing position and the opening 51b of the reagent container 51 is closed. With such a constitution, as in the embodiments described above, since the opening 51b of the reagent container 51 is opened only at the time of dispensing, modification and deterioration of the reagent are prevented.

### (Seventh embodiment)

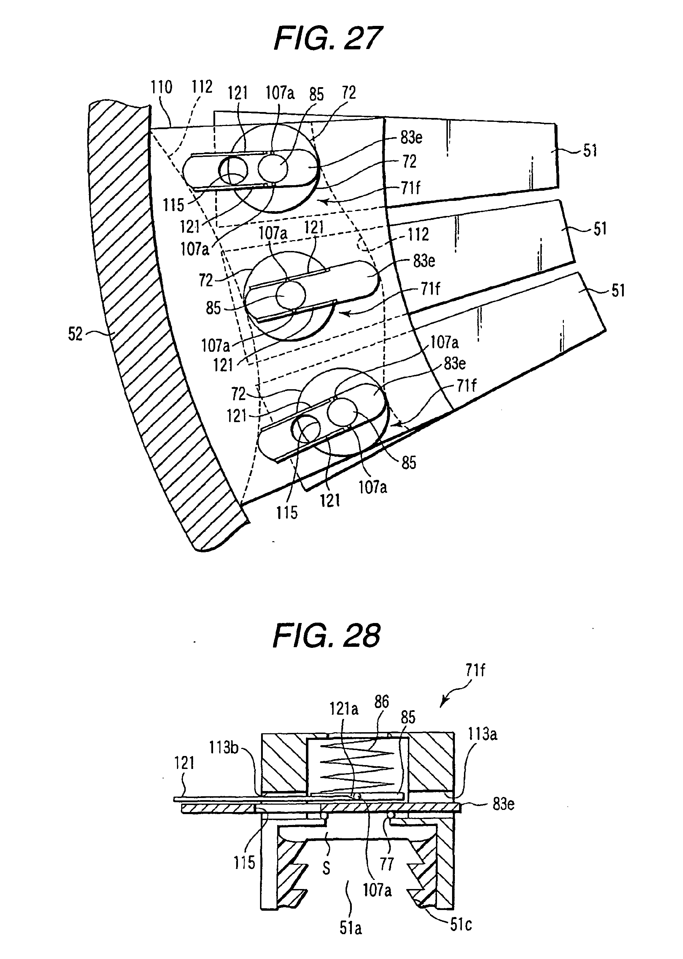

A seventh embodiment of the invention will be explained using FIGS. 27 to 29.

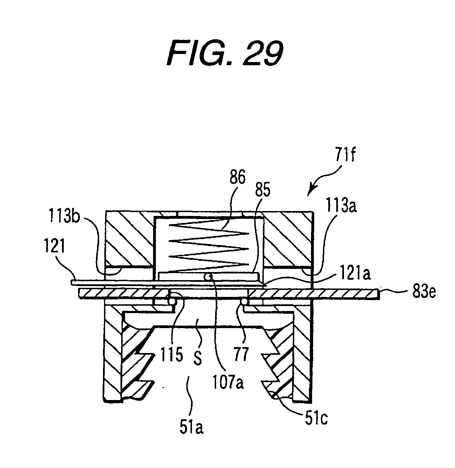

FIG. 27 is a schematic plan view of the guiding member 110 and a lid member 71f according to the seventh embodiment of the invention. FIG. 28 is a cross sectional view of the guiding member 110 and the lid member 71f at the time when the inner lid 83e according to this embodiment is in the closing position. FIG. 29 is a cross sectional view of the guiding member 110 and the lid member 71f at the time when the inner lid 83e according to this embodiment is in the opening position.

As shown in FIGS. 27 to 29, the lid member 71f according to this embodiment is a lid member in which the pressing member 85 for pressing the inner lid 83e against the seal material 77 and a releasing member 121 for releasing pressing of the pressing member 85 against the inner lid 83e at the time when the inner lid 83e is moved to the opening position are added to the lid member 71e according to the sixth embodiment.

The pressing member 85 is practically the same as that in the sixth embodiment. However, the pressing member 85 includes the two releasing projections 107a on the outer peripheral surface thereof. These releasing projections 107a are arranged in positions shifted about 180 degrees in the peripheral direction of the pressing member 85.

The releasing members 121 are provided on upper surfaces of the inner lids 83e along a longitudinal direction of the inner lids 83e, respectively. The releasing members 121 move in the radial direction of the reagent storage 52 integrally with the inner lids 83e. These releasing members 121 include, in upper surfaces at tips thereof, slopes 121a that are reduced in height with approach to the axis of the reagent storage 52.

This releasing member 121 slips the slope 121a underneath a releasing projection 120a using a force of the inner lid 83e moving toward the axis of the reagent storage 52 to lift the pressing member 85 and release the pressing of the pressing member 85 against the inner lid 83e.

With such a constitution, as in the embodiments described above, since tightness of the space S formed above the mouth 51a of the reagent container 51 is improved, deterioration and modification of the reagent in the reagent container 51 are further controlled.

### (Eighth embodiment)

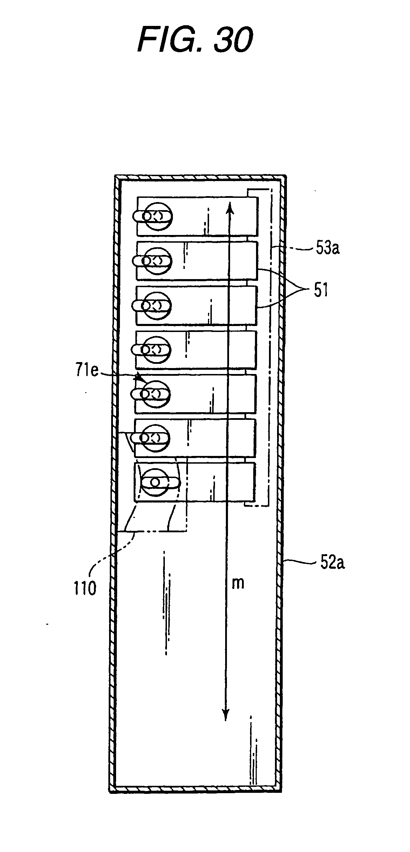

An eighth embodiment of the invention will be explained using FIG. 30.

FIG. 30 is a schematic plan view of the guiding member 110 and the lid member 71e according to an eighth embodiment of the invention.

As shown in FIG. 30, an analyzer according to this embodiment includes a reagent storage 52a of a rectangular parallelepiped shape. A container shelf 53a of a close coupled type is provided inside the reagent storage 52a. This container shelf 53a holds the plural reagent containers 51 and reciprocatingly conveys these reagent containers 51 in an arrow m direction of the reagent storage 52a in accordance with an instruction from the control unit 44.

Movement of the inner lids 83e is performed in the same manner as the sixth embodiment. Whereas a rotational motion of the reagent containers 51 is used to move the inner lids 83e in the sixth embodiment, a linear motion of the reagent containers 51 is used in this embodiment. Constitutions other than the motion forms of the container shelf 53a and the reagent containers 51 are practically the same as those in the sixth embodiment. With such a form, it is possible to obtain the same advantage as the sixth embodiment.

### (Ninth embodiment)

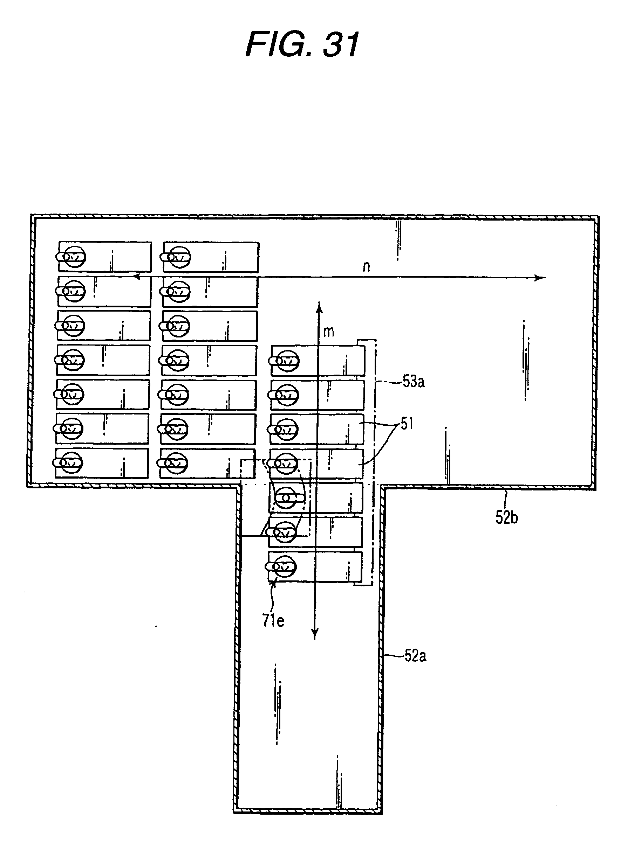

A ninth embodiment of the invention will be explained using FIG. 31.

FIG. 31 is a schematic plan view of the guiding member 110 and the lid member 71e according to the ninth embodiment of the invention.

As shown in FIG. 31, an analyzer according to this embodiment is an analyzer in which a reagent repository 52b is added to the reagent storage 52a according to the eighth embodiment. A storage container shelf (not shown) of a close coupled type is provided in the reagent repository 52b. This reagent container shelf holds the plural reagent containers 51 and reciprocatingly conveys these reagent containers 51 in an arrow n direction in accordance with an instruction from the control unit 44.

For example, when a reagent stored in the reagent container 51 in the reagent repository 52b is a reagent to be analyzed, the reagent container 51 in the reagent storage 52a is delivered to the reagent repository 52b by the container shelf 53a. The plural reagent containers 51 are conveyed to a position opposed to the reagent storage 52a by the storage container shelf and delivered to the container shelf 53a.

In this embodiment, the reagent repository 52b is added to the reagent storage 52a in the eighth embodiment. The same advantage as the eighth embodiment is obtained.

### (Tenth embodiment)

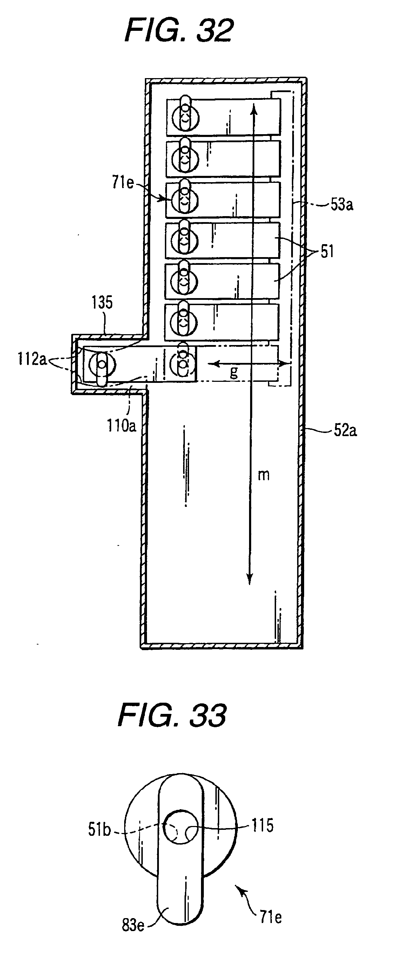

A tenth embodiment of the invention will be explained using FIGS. 32 to 34.

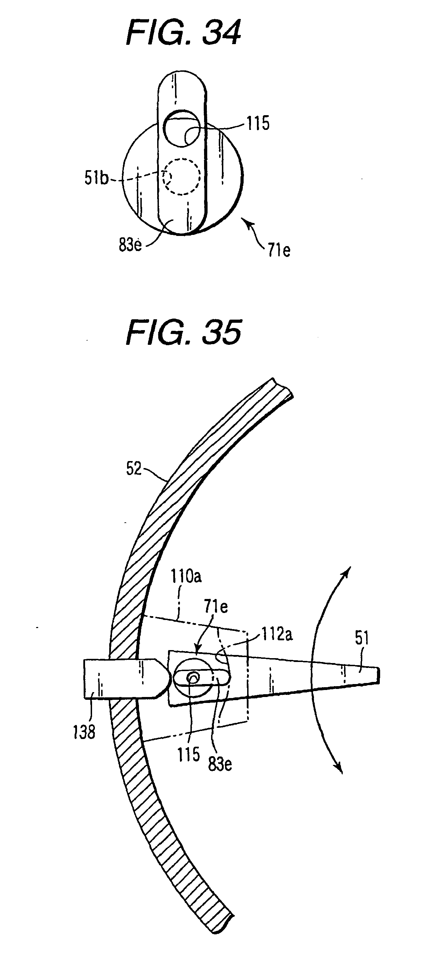

FIG. 32 is a schematic plan view of the guiding member 110 and the lid member 71e according to the tenth embodiment of the invention. FIG. 33 is a diagram of a relation between the inner lid 83e and the opening 51b at the time when the inner lid 83e according to this embodiment is in the closing position.. FIG. 34 is a diagram of a relation between the inner lid 83e and the opening 51b at the time when the inner lid 83e according to this embodiment is in the opening position.

As shown in FIG. 32, an analyzer according to this embodiment includes the reagent storage 52a of a rectangular parallelepiped shape. Although the reagent storage 52a is practically the same as that in the eighth embodiment, a protruded section 135 is provided in the dispensing position thereof. Therefore, a guiding member 110a for moving the inner lid 83e is provided in the protruded section 135.

The container shelf 53a of a close coupled type and a reciprocating container shelf (not shown) are provided inside the reagent storage 52a. This reciprocating container shelf reciprocatingly conveys the reagent container 51, which is positioned in a position opposed to the protruded section 135 by the container shelf 53a, in an arrow g direction.

When the reagent container 51 moves from the inside of the reagent storage 52a to the protruded section 135, the inner lid 83e is pressed by a guide surface 112a and moved to the opening position. Consequently, the hole 115 of the inner lid 83e and the opening 51b of the reagent container 51 are opposed to each other. As shown in FIG. 33, the opening 51b of the reagent container 51 is opened.

On the other hand, when the reagent container 51 moves from the inside of the protruded section 135 to the reagent storage 52a, the inner lid 83e is pressed by the guide surface 112a and moved to the opening position. Consequently, the hole 115 of the inner lid 83e and the opening 51b of the reagent container 51 are shifted from each other. As shown in FIG. 34, the opening 1b of the reagent container 51 is closed.

When the reagent container 51 is reciprocatingly conveyed in the protruded section 135, the inner lid 83e moves on a forward path and a backward path of the conveyance and the opening 51b of the reagent container 51 is opened and closed. Therefore, with such a constitution, the same advantage as the sixth embodiment is obtained. In this embodiment, since the reciprocation of the reagent container 51 is used, a shape of the guide surface 112a of the guiding member 110a only has to be a half of the guide surface 112 according to the sixth embodiment.

### (Eleventh embodiment)

An eleventh embodiment of the invention will be explained using FIGS. 35 to 37.

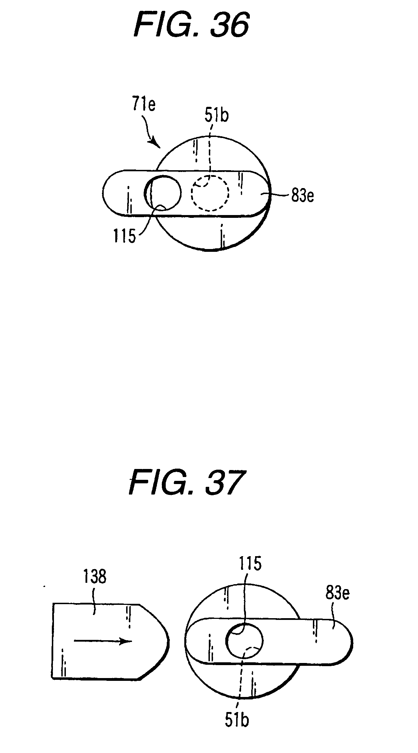

FIG. 35 is a schematic plan view of a guiding member 110b and the lid member 71e according to the eleventh embodiment of the invention. FIG. 36 is a diagram of a relation between the inner lid 83e and the opening 51b at the time when the inner lid 83e according to this embodiment is in the closing position. FIG. 37 is a diagram of a relation between the inner lid 83e and the opening 51b at the time when the inner lid 83e according to this embodiment is in the opening position.

In an analyzer according to this embodiment, a rotational motion of the reagent container 51 is used when the opening 51b of the reagent container 51 is closed. An opening device 138 is used when the opening 51b of the reagent container is opened.

As shown in FIG. 35, the guiding member 110b according to this embodiment includes, on the axis side of the reagent storage 52, one guide surface 112a that moves the inner lid 83e to the closing position and includes, on the wall side of the reagent storage 52, the opening device 138 that moves the inner lid 83e to the opening position.

When the reagent container 51 is positioned in the dispensing position, the opening device 138 projects to the inner side of the reagent storage 52 and moves the inner lid 83e to the center side of the reagent storage 52 with a tip thereof. Consequently, the inner lid 83e moves to the opening position and the opening 51b of the reagent container 51 is opened as shown in FIG. 37. With such a constitution, the same advantage as the sixth embodiment is obtained.

### (Twelfth embodiment)

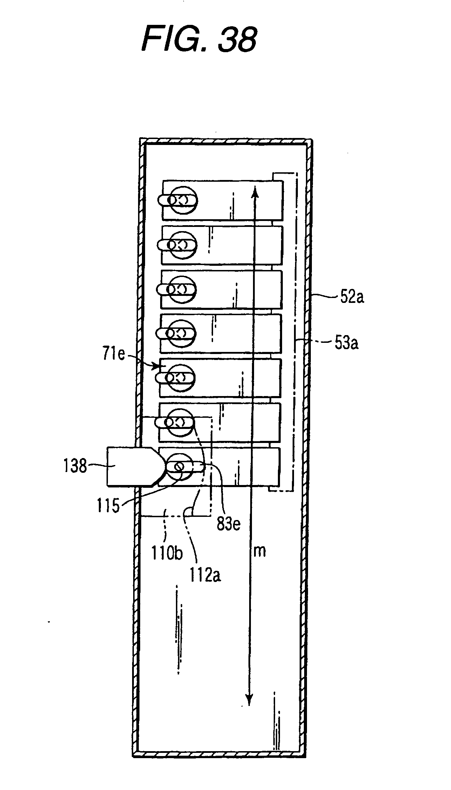

A twelfth embodiment of the invention will be explained using FIG. 38.

FIG. 38 is a schematic plan view of the guiding member 110b and the lid member 71e according to the twelfth embodiment of the invention.

As shown in FIG. 38, an analyzer according to this embodiment includes the reagent storage 52a of a rectangular parallelepiped shape instead of the reagent storage 52 of a cylindrical shape according to the eleventh embodiment. This reagent storage 52a is the same as that in the eighth embodiment. However, the container shelf 53a of a close coupled type is provided inside the reagent storage 52a.

This container shelf 53a holds the plural reagent containers 51 and reciprocatingly conveys these reagent containers 51 in an arrow m direction. Movement of the inner lids 83e is performed in the same manner as the eleventh embodiment using a linear motion of the reagent containers 51. With such a constitution, the same advantage as the eleventh embodiment is obtained.

In the respective embodiments described above, a flexible material made of rubber is used for the seal material 74. However, the invention is not limited to this. For example, a hard material is used for the seal material 74. In that case, a screw groove is formed in an inner peripheral surface of the seal material 74 such that a direction of an inner lid is a desired direction when a lid member is completely mounted on the mouth 51a. Consequently, if the lid member is completely mounted, since a direction of the inner lid is also correctly set, mounting work for the lid member is simplified.

The invention is not limited to the embodiments only. It is possible to modify and embody the components within a range not departing from the spirit thereof at an embodiment stage. It is possible to form various inventions with appropriate combinations of the plural components disclosed in the embodiments. For example, several components may be deleted from all the components described in the embodiments. Moreover, the components described in the different embodiments may be appropriately combined.

## Claims

1. An analyzer that causes a sample and a reagent to react with each other and analyzes the sample, **characterized by** comprising:
reagent containers that store reagents and include openings for putting in and taking out the reagents;
lid members that are provided to be movable relatively to the openings and used for opening and closing the openings;
a shelf that moves the reagent containers; and
an opening/closing device that opens and closes the openings by moving the lid members using movement of the reagent containers.

2. An analyzer according to claim 1, **characterized in that** the movement of the reagent containers is a rotational motion.

3. An analyzer according to claim 1, **characterized in that** the movement of the reagent containers is a linear motion.

4. An analyzer according to claim 1, **characterized in that** the opening/closing device moves the lid members perpendicularly to axes of the openings.

5. An analyzer according to claim 1, **characterized in that** the opening/closing device moves the lid members parallel to axes of the openings.

6. An analyzer according to claim 1, **characterized by** comprising a member that moves, when the lid members close the openings, the lid members to the openings side.

7. An analyzer that causes a sample and a reagent to react with each other and analyzes the sample, **characterized by** comprising:
reagent containers that store reagents and include openings for putting in and taking out the reagents;
lid members that are provided to be movable relatively to the openings and used for closing the openings;
a shelf that moves the reagent containers; and
a closing device that closes the opened openings by moving the lid-members using movement of the reagent containers.

8. An analyzer according to claim 7, **characterized in that** the movement of the reagent containers is a rotational motion.

9. An analyzer according to claim 7, **characterized in that** the movement of the reagent containers is a linear motion.

10. An analyzer according to claim 7, **characterized in that** the closing device moves the lid members perpendicularly to axes of the openings.

11. An analyzer according to claim 7,
**characterized in that** the closing device moves the lid members parallel to axes of the openings.

12. An analyzer according to claim 7, **characterized by** comprising a member that moves, when the lid members close the openings, the lid members to the openings side.

13. A lid device provided in openings of reagent containers that is moved to a predetermined position as need arises, **characterized by** comprising:
lid members that are provided to be slidable relatively to the openings of the reagent containers and includes holes; and
an opening/closing device that opens and closes the openings of the reagent containers by sliding the lid members using movement of the reagent containers to adjust positions of the holes and the openings.

14. A reagent storing device that is used for storing reagents and moved to a predetermined position as need arises, **characterized by** comprising:
reagent containers that store the reagents and include openings for putting in and taking out the reagents;
lid members that are provided to be slidable relatively to the openings and have holes; and
an opening/closing device that opens and closes the openings of the reagent containers by sliding the lid members using movement of the reagent container to adjust positions of the holes and the openings.
